# EUROPEAN PATENT SPECIFICATION

(11) **EP 1 855 771 B1**
(45) Date of publication and mention of the grant of the patent: **31.10.2012**
(21) Application number: 06708703.1
(22) Date of filing: 09.03.2006
(51) Int. Cl.: C02F 1/04, C02F 11/12, F26B 17/20, F26B 23/00, B01D 1/00

(54) **METHOD AND APPARATUS FOR DRYING SLUDGE OR SHOVELLABLE SUBSTANCES WITH HIGH MOISTURE CONTENT**
VERFAHREN UND VORRICHTUNG ZUM TROCKNEN VON SCHLAMM ODER SCHAUFELBAREN SUBSTANZEN MIT HOHEM FEUCHTIGKEITSGEHALT
PROCEDE ET DISPOSITIF DESTINES AU SECHAGE DE BOUES OU DE SUBSTANCES PELLETABLES A TENEUR ELEVEE EN HUMIDITE

(30) Priority: 11.03.2005 IT MI20050401
(43) Date of publication of application: 21.11.2007
(73) Proprietor: Bellini, Vincenzo, 24030 Mozzo (IT)
(72) Inventor: Bellini, Vincenzo, 24030 Mozzo (IT)
(74) Representative: Modiano, Micaela Nadia
(86) International application number: PCT/EP2006/060601
(87) International publication number: WO 2006/095010

(56) References cited:
- EP-A- 0 927 703
- DE-A1- 19 644 465
- GB-A- 806 699
- GB-A- 1 127 267
- GB-A- 1 494 487
- US-A- 4 785 554
- US-A- 4 974 335

## Description

### Technical Field

The present invention relates to a method and an apparatus for drying sludge or shovellable substances with high moisture content. The method and the apparatus according to the invention are intended to be used in particular to dry sludge or shovellable substances with a water content of even more than 50%, produced by apparatuses for conditioning wastewater, in preparation for their disposal by compaction, incineration or burial in landfills.

### Background Art

Currently, sludges or shovellable substances are dried generally by using apparatuses which comprise a heat exchanger which has a generally cylindrical cross-section and is provided with a jacket heated by means of a primary fluid, constituted by steam or, more frequently, by diathermic oil, and provided with an internal heating section with a stream of hot air or with a device which can also act as a mixer. The sludge or other shovellable substance is introduced in this heat exchanger, where, due to heating, it is gradually dried, releasing an evaporate, constituted by water vapor and fumes, which is subjected to filtration through wet filters (scrubber or Venturi tubes) and dry filters (sleeve filters and electrostatic filters). If the evaporate contains pollutants, it is usually condensed by means of a vacuum extraction unit and sent in liquid form to adapted treatment and conditioning apparatuses.

The heat energy required to heat the primary fluid used in the heat exchanger, and therefore to perform the drying process with these apparatuses, is generally produced by burning methane gas.

In the field of sludge treatment, particularly sludge deriving from the conditioning of wastewater, as well as in other industrial sectors, the need has always been felt to reduce the energy consumption required to perform the treatments.

US-A-4 974 335 discloses a method and apparatus for drying sewage sludge, employing a cylindrical rotary drying reactor having a plurality of heat exchange tubes arranged on the periphery of the cylindrical reactor, such heat exchange tubes being fed with steam recovered from the sludge dried in the reactor.

DE-A-19644465 discloses a heated hollow tube comprising a screw conveyor for the sludge to be dried, which is held within an essentially closed process and steam is extracted by means of low pressure and/or vacuum; the steam extracted is compressed, condensed and the liberated latent heat is recovered and used again in the process as heat energy.

### Disclosure of the Invention

The aim of the present invention is to meet this need, by providing a method and an apparatus for drying sludge or shovellable substances with a high moisture content which allow to achieve a substantial reduction in the heat energy required to dry the sludge or other shovellable substance.

Within this aim, an object of the present invention is to provide a method and an apparatus which allow to reduce the emissions of fumes and heat into the atmosphere.

Another object of the present invention is to provide an apparatus which can be manufactured with components which are simple and more compact than those of sludge drying apparatuses of the traditional type.

A further object of the present invention is to be able to achieve greater dehydration of the sludge so as to reduce the amount, in weight, of the sludge to be conveyed to a landfill or to be incinerated, thus also achieving a saving in transport costs.

In accordance with the invention, there is provided an apparatus for drying sludge or shovellable substances with high moisture content as defined in the appended claims 1-8. Also provided is a method for drying sludge or shovellable substances with a high moisture content, as defined in the appended claim 9.

### Brief description of the Drawings

Further characteristics and advantages of the invention will become better apparent from the following detailed description of two preferred but not exclusive embodiments of a method and an apparatus according to the invention, illustrated by way of non-limiting example in the accompanying drawings, wherein:

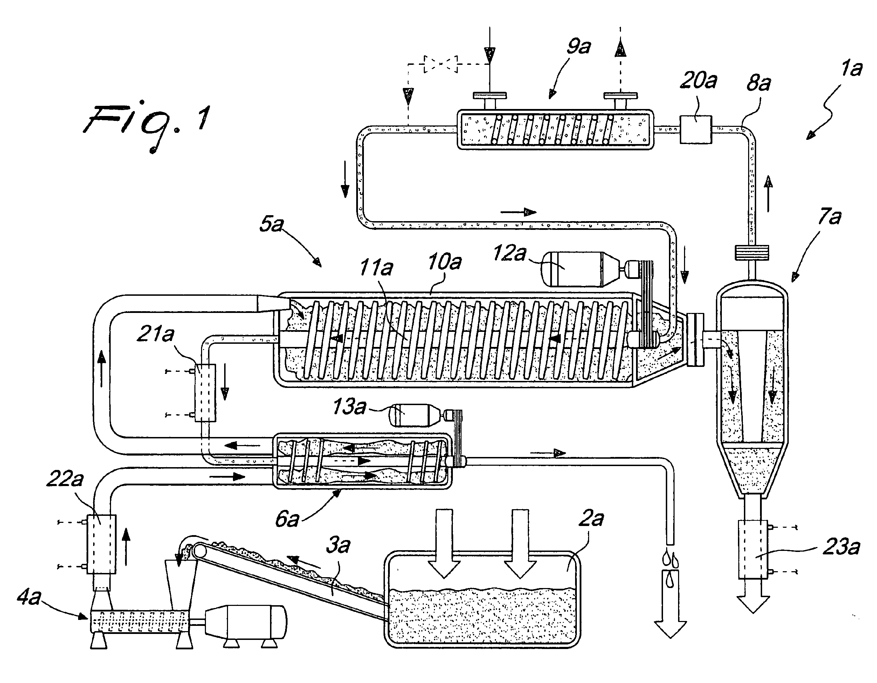

Figure 1 is a view of an apparatus according to the invention in a first embodiment;

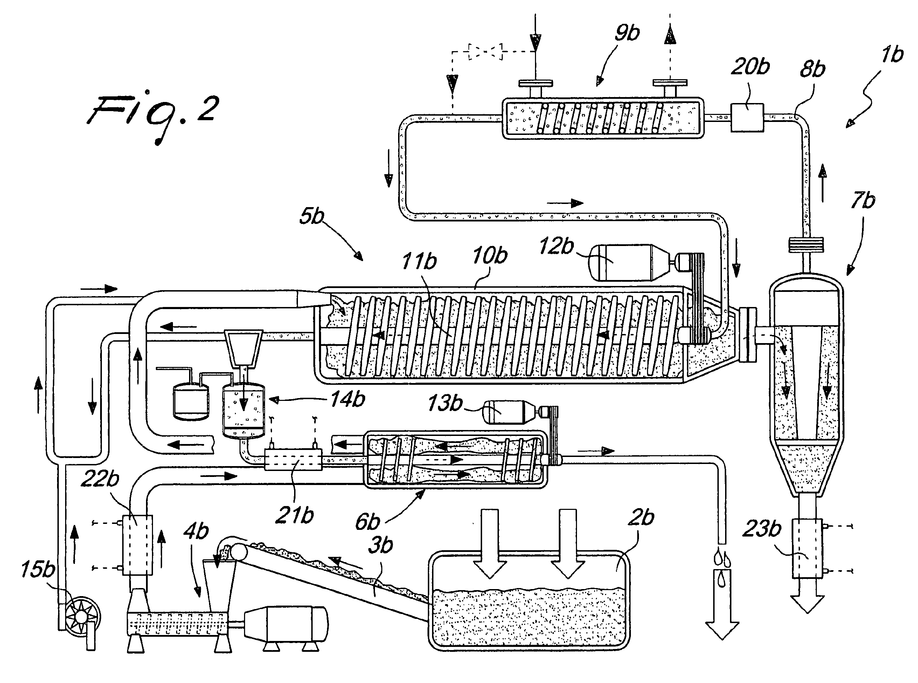

Figure 2 is a view of an apparatus according to the invention in a second embodiment.

### Ways of carrying out the Invention

With reference to the figures, an apparatus according to the invention, generally designated by the reference numerals 1a, 1b in the two embodiments, comprises a storage container 2a, 2b, in which the sludge or other substance to be dried is to be introduced and which, by means of a conveyor 3a, 3b of the belt or screw feeder type or other type, feeds a motorized pump 4a, 4b.

The apparatus comprises at least one main heat exchanger 5a, 5b, which is fed with a primary heating fluid and with the sludge or other substance to be dried (secondary fluid). According to the invention, the apparatus comprises means for collecting the evaporate which derives from the drying of the sludge and means for conveying this evaporate into the main heat exchanger 5a, 5b as primary fluid.

Preferably, the apparatus according to the invention comprises a preheating heat exchanger 6a, 6b, which is fed with a primary heating fluid and with the sludge or other substance to be dried (secondary fluid) before it is introduced in the main heat exchanger 5a, 5b.

Conveniently, the primary fluid used in the preheating heat exchanger 6a, 6b is constituted by the evaporate or rather by the condensate which derives from the evaporate used as primary fluid in the main heat exchanger 5a, 5b.

In greater detail, the delivery of the motorized pump 4a, 4b is connected to the inlet of the secondary fluid of the preheating heat exchanger 6a, 6b.

The preheating heat exchanger 6a, 6b can be constituted by a static heat exchanger of a known type or by a rotary exchanger, as shown, which is actuated by means of a gearmotor 13a, 13b. The condensate that arrives from the main heat exchanger 5a, 5b, depending on the type of preheating heat exchanger 6a, 6b, can be made to circulate in the jacket of the preheating heat exchanger 6a, 6b and/or in an internal element, which can be provided as a screw feeder and, in the case of a rotary heat exchanger, can be used to mix and produce the advancement of the sludge along the preheating heat exchanger 6a, 6b.

The means for collecting the evaporate produced by the drying of the sludge in the main heat exchanger 5a, 5b comprise a separator for separating the dry fraction of the sludge from the evaporate, which is connected to the outlet of the secondary fluid of the main heat exchanger 5a, 5b. Said separator is constituted preferably by a cyclone separator 7a, 7b, which is connected, at its upper end, to a duct 8a, 8b, through which the evaporate is extracted, and which discharges the dry sludge fraction at its lower end.

The duct 8a, 8b is connected to the inlet of a superheating exchanger 9a, 9b, of a known type, and the outlet of the superheated evaporate of the superheating exchanger 9a, 9b is connected to the inlet of the primary fluid of the main heat exchanger 5a, 5b.

Preferably, the superheating exchanger 9a, 9b is constituted by an exchanger which uses as its primary fluid steam produced by a known type of steam generator, not shown for the sake of simplicity, and the primary fluid of the superheating exchanger 9a, 9b can be used to heat the sludge in the main heat exchanger 5a, 5b instead of the evaporate produced by the drying of the sludge during the startup of the apparatus.

Optionally, as an alternative to, or in combination with, the superheating exchanger 9a, 9b, it is possible to provide a compressor 20a, 20b for compressing the evaporate that arrives from the cyclone separator 7a, 7b.

The function of the compressor is to increase, by mechanical energy, the enthalpy of the evaporate that arrives from the cyclone separator 7a, 7b, increasing its pressure and temperature.

If the heat energy increase provided by the compressor 20a, 20b exceeds the requirements of the apparatus, the superheating exchanger 9a, 9b, in steady-state operation, can act as a heat exchanger in which the primary fluid is constituted by the evaporate in output from the compressor 20a, 20b and the secondary fluid, heated by said primary fluid, is constituted by steam or other fluid which can be used to supply auxiliary heat exchangers in order to transfer any excess heat energy to other points of the apparatus, as will become better apparent hereinafter.

The main heat exchanger 5a, 5b has, in a per se known manner, a substantially cylindrical hollow shape, with an external jacket 10a, 10b, inside which the primary fluid constituted by the evaporate that arrives from the superheating exchanger 9a, 9b is circulated. The main heat exchanger 5a, 5b is provided with an internal body 11 a, 11b, which is also hollow and inside which a primary fluid is introduced which is constituted by the evaporate that arrives from the superheating exchanger 9a, 9b.

The internal body 11a, 11b is provided so as to act as a surface for transmitting heat between the evaporate introduced in the main heat exchanger 5a, 5b and the sludge and simultaneously produce the gradual advancement of the sludge along the main heat exchanger 5a, 5b. Merely by way of indication, the internal body 11a, 11b can be provided as a screw feeder and can be driven by means of a gearmotor 12a, 12b.

According to requirements, instead of a single main heat exchanger 5a, 5b it is possible to provide a plurality of main exchangers, of the type described above, connected to each other in series and/or in parallel.

The cross-section for the advancement of the sludge along the main heat exchanger 5a, 5b can be constant or variable according to requirements.

The temperatures and pressures of the sludge drying process can be different depending on the composition of the sludge to be dried and on the degree of drying that is required.

In the second embodiment of the apparatus, there are means for injecting a gas, preferably air, into the main heat exchanger 5b together with the sludge to be dried.

Such air injection means comprise a compressor 15b, which draws air from the atmosphere and injects it into the sludge inside the main heat exchanger 5b. The delivery pipe of the compressor 15b, by means of a branch, collects the air (previously injected into the sludge and conveyed together with the evaporate produced by the drying of the sludge) which arrives from the main heat exchanger 5b, after it has been cleared of any liquid particles by means of a separator-deaerator 14b, and introduces it together with the air drawn from the atmosphere, through injectors of a known type, not shown for the sake of simplicity, into the sludge subjected to drying inside the main heat exchanger 5b.

In the apparatus in this second embodiment, the solid/liquid/air ratio is determined as a function of the process temperature, and therefore the pressure, at which one wishes to achieve the separation of the evaporate and the dried solid.

In both of the embodiments described above it is possible to provide additional heat exchangers in order to transmit to the sludge any excess heat energy in the evaporate in output from the compressor 20a, 20b or from the superheating exchanger 9a, 9b, such as for example a heat exchanger 21 a, 21b for heating the condensate in output from the main heat exchanger 5a, 5b before it is introduced in the preheating exchanger 6a, 6b and/or a heat exchanger 22a, 22b for heating the sludge before it is introduced in the preheating exchanger 6a, 6b and/or a heat exchanger 23a, 23b for superheating the sludge in output from the cyclone separator 7a, 7b in order to increase its drying.

These auxiliary heat exchangers use, as their primary fluid, the fluid heated by the evaporate in its passage within the superheating exchanger 9a, 9b in its operation as a heat exchanger to recover any excess heat energy in the evaporate after its compression due to the action of the compressor 20a, 20b.

The operation of the described apparatus in performing the method according to the invention is as follows.

The sludge or other substance to be dried is introduced in the storage container 2a, 2b and from there, by means of the conveyor 3a, 3b, is fed to the motorized pump 4a, 4b, which conveys it first through the preheating heat exchanger 6a, 6b and then into the main heat exchanger 5a, 5b.

In the steady-state operating conditions of the apparatus, inside the main heat exchanger 5a, 5b the sludge is heated by means of the evaporate, which is generated in the main heat exchanger 5a, 5b as a consequence of the drying of the sludge and which, after being separated from the dry fraction of the sludge in the cyclone separator 7a, 7b, is superheated beforehand in the superheating exchanger 9a, 9b and/or compressed by means of the compressor 20a, 20b.

The main heat exchanger 5a, 5b, is preferably sized so that the evaporate that is used to dry the sludge is condensed at the outlet of the main heat exchanger 5a, 5b. In this manner, the sludge is dried by recovering part of the sensible heat and the latent heat that is present in the evaporate.

The condensate which arrives from the main heat exchanger 5a, 5b is then used as a primary fluid in the preheating heat exchanger 6a, 6b, thus achieving a further recovery of part of the sensible heat that is present in the evaporate produced by the drying of the sludge. The condensate in output from the preheating exchanger 6a, 6b can be sent to a wastewater treatment apparatus, for example to the same apparatus from which the sludge being dried arrives.

In this manner, one achieves a considerable energy saving, which can even exceed 70%, in drying sludges or other shovellable substances with respect to methods and apparatuses of the traditional type.

Merely by way of indication, a comparison is given hereafter between the energy consumption for drying a flow-rate of 1000 kg/h of sludge with a dry substance content of 20% with a drying apparatus of the traditional type and with an apparatus according to the invention.
Flow-rate of sludge to be dried = 1000 kg/h
Liquid content of the sludge to be evaporated = 80%
Dry content of the sludge = 20%
Temperature of the sludge = 20°C
Drying temperature = 120°C
Specific heat of dry content of sludge = 1.46 kJ/kg

The energy requirement in order to achieve sludge drying is 29.29 MJ in order to bring the dry content from 20°C to 120°C and is 1849.30 MJ in order to achieve the heating and evaporation of the moist content. Considering heat losses of 15% (281.70 MJ), the overall heat energy demand for sludge drying is 2160.29 MJ.

With a drying apparatus of a known type, this amount of heat energy which must be supplied to the sludge is generally derived from combustible gas (usually methane). Since methane has a net calorific value (NCV) of 35.36 MJ/Nm³ (standard cubic meter), the overall consumption is 60.75 Nm³/h, i.e., a specific consumption of 0.061 Nm³/kg of sludge.

In the apparatus according to the invention, in the first illustrated embodiment, for the same total heat energy requirement, the evaporate produced by the evaporation of 70% of the water contained in the sludge (assuming that the remaining 10% remains in the sludge) is 700 kg/h. After a superheating which raises its temperature by 35°C above the 120°C at which it already is, with a consumption of 77.32 MJ, the evaporate is used to heat and produce the evaporation of the moist content of the sludge in the main heat exchanger 5a and to preheat the sludge in the preheating heat exchanger 6a. The heat energy released by the evaporate to the sludge in the main heat exchanger 5a, in output from which the evaporate is condensed, is equal to 1651.84 MJ (this energy comprises the latent heat of condensation and part of the sensible heat of the evaporate).

The heat energy, produced by the sensible heat of the condensate, which the condensate supplies to the sludge in the preheating heat exchanger is 146.44 MJ.

In total, the amount of heat that must be supplied, in the apparatus according to the invention in the first embodiment, is 2160.29 MJ (total energy requirement) + 77.32 MJ (energy to superheat the evaporate) - 1651.84 MJ (energy released by the condensation of the evaporate in the main heat exchanger) - 146.44 MJ (energy released by the condensate in the preheating heat exchanger) = 439.33 MJ.

Producing this energy requires 12.35 Nm³/h of methane gas, i.e., 0.012 Nm³/kg of sludge, with a saving of 79.6% with respect to the consumption required by an apparatus of the traditional type.

With the apparatus according to the invention in its second embodiment, owing to the fact that the apparatus operates with higher drying temperatures, the energy requirement is higher by approximately 15% with respect to the apparatus of the first embodiment and the energy saving with respect to apparatuses of the traditional type drops to 70%, but one obtains, in addition to the reduction of the required heat exchange surfaces (the heat exchange coefficient increases as the speed of the evaporate mixed with air increases), which allows to contain the space occupation of the apparatus, a reduction in the residual humidity in the dried sludge.

In practice it has been found that the method and the apparatus according to the invention fully achieve the intended aim and objects, since they allow to reduce significantly the heat energy required to dry the sludge or other shovellable substance with respect to the energy required by known types of apparatus and method.

Further, the method and the apparatus according to the invention allow to avoid emissions of fumes and heat into the atmosphere and also reduce the amount of dry residue of the sludge to be disposed.

The method and the apparatus thus conceived are susceptible of numerous modifications and variations, all of which are within the scope of the appended claims; all the details may further be replaced with other technically equivalent elements.

In practice, the materials used, as well as the dimensions, may be any according to requirements and to the state of the art.

## Claims

1. An apparatus (1a;1b) for drying sludge or shovellable substances with a water contend of more than 50%, comprising:
at least one heat exchanger (5a;5b) for being supplied with a heating fluid and with the sludge or other substance to be dried;
means for collecting the evaporate that derives from the drying of the sludge and comprising, in outlet from said heat exchanger (5a;5b), a separator (7a;7b) for separating the dry fraction of the sludge from the evaporate developed by the sludge during drying; and
means for conveying said evaporate into said heat exchanger (5a;5b) as said heating fluid, and comprising a superheating exchanger (9a;9b) for superheating the evaporate which arrives from said separator (7a;7b) before it is introduced in said heat exchanger (5a;5b);
said main heat exchanger (5a;5b) having a substantially cylindrical hollow shape, with an external jacket (10a;10b), inside which the evaporate from said superheating exchanger (9a;9b) is circulated, the main heat exchanger (5a;5b) being provided internally with an internal hollow body (11a;11b) inside which the evaporate arriving from said superheating exchanger (9a;9b) is introduced whereby the internal hollow body (11a; 11b) acts as a surface for transmitting heat between the evaporate and the sludge and simultaneously produces the gradual advancement of the sludge along the main heat exchanger (5a,5b).

2. The apparatus according to claim 1, **characterized in that** said separator is constituted by a cyclone separator (7a;7b).

3. The apparatus according to one or more of the preceding claims, **characterized in that** it comprises a compressor (20a;20b) for compressing the evaporate that arrives from said separator (7a;7b) before it is introduced in said heat exchanger (5a;5b).

4. The apparatus according to one or more of the preceding claims, **characterized in that** it comprises a preheating heat exchanger (6a;6b), which can be supplied with a primary heating fluid and with the sludge or other substance to be dried before it is introduced in said heat exchanger (5a;5b).

5. The apparatus according to claim 3, **characterized in that** it comprises means for transmitting the excess heat energy in the evaporate, in output from said compressor (20a;20b) and/or from said superheating exchanger (9a;9b), to the sludge.

6. The apparatus according to one or more of the preceding claims, **characterized in that** it comprises means (15b) for injecting a gas into said heat exchanger (5a;5b) together with the sludge to be dried.

7. The apparatus according to claim 6, **characterized in that** said means for injecting a gas comprise a compressor (15b) which draws air from the atmosphere and is connected by means of its delivery to said heat exchanger (5b).

8. The apparatus according to claim 7, **characterized in that** the delivery of said compressor (15b) is connected, by means of a separator-deaerator (14b), to the duct for the outflow of the primary fluid from said heat exchanger (5b) in order to recover the air injected earlier into said heat exchanger (5b) and entrained by the evaporate.

9. A method for drying sludge or shovellable substances with a moisture content of more than 50% carried out in an apparatus according to any one or more of the apparatus claims 1 to 8.

## Patentansprüche

1. Eine Vorrichtung (1a, 1b) zum Trocknen von Schlamm oder schaufelbaren Substanzen mit einem Wassergehalt von mehr als 50%, die Folgendes umfasst:
mindestens einen Wärmetauscher (5a; 5b), um mit einem Heizfluid und mit dem Schlamm oder der anderen zu trocknenden Substanz versorgt zu werden;
Mittel zum Sammeln des Verdampfungsguts, das vom Trocknen des Schlamms stammt, um am Ausgang des Wärmetauschers (5a; 5b) einen Abscheider (7a; 7b) umfassend, zum Trennen der trockenen Fraktion des Schlamms von dem Verdampfungsgut, das vom Schlamm während des Trocknens entwickelt wird; und
Mittel zum Befördern des Verdampfungsguts in den Wärmetauscher (5a; 5b) als das Heizfluid, und einen Überhitzungs-Wärmetauscher (9a; 9b) zum Überhitzen des Verdampfungsguts, das von dem Abscheider (7a; 7b) kommt, bevor es in den Wärmetauscher (5a; 5b) eingeführt wird, umfassend;
wobei der Haupt-Wärmetauscher (5a; 5b) eine im Wesentlichen zylindrische hohle Form hat, mit einem äußeren Mantel (10a; 10b), in dem das Verdampfungsgut von dem Überhitzungs-Wärmetauscher (9a; 9b) zirkuliert wird, wobei der Haupt-Wärmetauscher (5a; 5b) mit einem inneren Hohlkörper (11a; 11b) versehen ist, in den das von dem Überhitzungs-Wärmetauscher (9a; 9b) kommende Verdampfungsgut eingeführt wird, wodurch der innere Hohlkörper (11a; 11b) als Oberfläche zur Übertragung von Wärme zwischen dem Verdampfungsgut und dem Schlamm wirkt und gleichzeitig die allmähliche Vorwärtsbewegung des Schlamms entlang dem Haupt-Wärmetauscher (5a, 5b) erzeugt.

2. Die Vorrichtung gemäß Anspruch 1, **dadurch gekennzeichnet, dass** der Separator in einem Zyklonabscheider (7a; 7b) besteht.

3. Die Vorrichtung gemäß einem oder mehreren der obigen Ansprüche, **dadurch gekennzeichnet, dass** sie einen Kompressor (20a; 20b) zum Komprimieren des von dem Abscheider (7a; 7b) kommenden Verdampfungsguts, bevor es in den Wärmetauscher (5a; 5b) eingeführt wird, umfasst.

4. Die Vorrichtung gemäß einem oder mehreren der obigen Ansprüche, **dadurch gekennzeichnet, dass** sie einen Vorwärm-Wärmetauscher (6a; 6b) umfasst, der mit einem primären Heizfluid und mit dem Schlamm oder der anderen zu trocknenden Substanz versorgt werden kann, bevor er bzw. sie in den Wärmetauscher (5a; 5b) eingeführt wird.

5. Die Vorrichtung gemäß Anspruch 3, **dadurch gekennzeichnet, dass** sie Mittel zur Übertragung der überschüssigen Wärmeenergie im Verdampfungsgut, in der Ausgabe des Kompressors (20a; 20b) und/oder von dem überhitzungs-Wärmetauscher (9a; 9b) an den Schlamm umfasst.

6. Die Vorrichtung gemäß einem oder mehreren der obigen Ansprüche, **dadurch gekennzeichnet, dass** sie Mittel (15b) zum Einspritzen eines Gases in den Wärmetauscher (5a; 5b) gemeinsam mit dem zu trocknenden Schlamm umfasst.

7. Die Vorrichtung gemäß Anspruch 6, **dadurch gekennzeichnet, dass** die Mittel zum Einspritzen eines Gases einen Kompressor (15b) umfassen, der Luft aus der Atmosphäre zieht und durch seinen Ausgang mit dem Wärmetauscher (5b) verbunden ist.

8. Die Vorrichtung gemäß Anspruch 7, **dadurch gekennzeichnet, dass** der Ausgang des Kompressors (15b) über einen Abscheider-Entgaser (14b) mit der Leitung für das Ausströmen des primaren Fluids von dem Wärmetauscher (5b) verbunden ist, zur Rückgewinnung der Luft, die zuvor in den Wärmetauscher (5b) eingespritzt und von dem Verdampfungsgut mitgerissen wurde.

9. Ein Verfahren zum Trocknen von Schlamm oder schaufelbaren Substanzen mit einem Feuchtigkeitsgehalt von mehr als 50%, durchgeführt in einer Vorrichtung gemäß einem beliebigen oder mehreren der Vorrichtungsansprüche 1 bis 8.

## Revendications

1. Dispositif (1a ; 1b) pour déshydrater des boues ou des substances pelletables à teneur en humidité supérieure à 50 %, comportant :
au moins un échangeur de chaleur (5a ; 5b) destiné à recevoir un fluide chauffant et les boues ou autre substance à déshydrater ;
un moyen pour recueillir l'évaporat qui résulte de la déshydratation des boues et comprenant, à la sortie dudit échangeur de chaleur (5a ; 5b), un séparateur (7a ; 7b) pour séparer la fraction sèche des boues de l'évaporat libéré par les boues pendant la déshydratation ; et
un moyen pour introduire ledit évaporat, en tant que dit fluide chauffant, dans ledit échangeur de chaleur (5a ; 5b), et comprenant un échangeur surchauffeur (9a ; 9b) pour surchauffer l'évaporat qui arrive dudit séparateur (7a ; 7b) avant son introduction dans ledit échangeur de chaleur (5a ; 5b) ;
ledit échangeur de chaleur principal (5a ; 5b) ayant une forme sensiblement cylindrique creuse, avec une chemise externe (10a ; 10b) à l'intérieur de laquelle est amené à circuler l'évaporat provenant dudit échangeur surchauffeur (9a ; 9b), l'échangeur de chaleur principal (5a ; 5b) étant pourvu d'un corps interne creux (11a ; 11b) à l'intérieur duquel est introduit l'évaporat provenant dudit échangeur surchauffeur (9a ; 9b), grâce à quoi le corps interne creux (11a ; 11b) sert de surface de transmission de chaleur entre l'évaporat et les boues et fait en même temps avancer progressivement les boues le long de l'échangeur de chaleur principal (5a ; 5b).

2. Dispositif selon la revendication 1, **caractérisé en ce que** ledit séparateur est constitué par un séparateur cyclonique (7a ; 7b).

3. Dispositif selon une ou plusieurs des revendications précédentes, **caractérisé en ce qu'**il comporte un compresseur (20a ; 20b) pour comprimer l'évaporât qui arrive dudit séparateur (7a ; 7b) avant son introduction dans ledit échangeur de chaleur (5a ; 5b) .

4. Dispositif selon une ou plusieurs des revendications précédentes, **caractérisé en ce qu'**il comporte un échangeur de chaleur préchauffant (6a ; 6b), lequel peut être alimenté en fluide chauffant primaire et en boues ou autre substance à déshydrater avant leur introduction dans ledit échangeur de chaleur (5a ; 5b).

5. Dispositif selon la revendication 3, **caractérisé en ce qu'**il comporte un moyen pour transmettre aux boues l'excédent d'énergie thermique présent dans l'évaporat, à la sortie dudit compresseur (20a : 20b) et/ou dudit échangeur surchauffeur (9a ; 9b).

6. Dispositif selon une ou plusieurs des revendications précédentes, **caractérisé en ce qu'**il comporte un moyen (15b) pour injecter un gaz dans ledit échangeur de chaleur (5a ; 5b) conjointement avec les boues à déshydrater.

7. Dispositif selon la revendication 6, **caractérisé en ce que** ledit moyen pour injecter un gaz comprend un compresseur (15b) qui prélève de l'air dans l'atmosphère et est relié audit échangeur de chaleur (5b) par son système de refoulement.

8. Dispositif selon la revendication 7, **caractérisé en ce que** le système de refoulement dudit compresseur (15b) est relié, à l'aide d'un séparateur-désaérateur (14b), au conduit de sortie du fluide primaire dudit échangeur de chaleur (5b) afin de récupérer l'air injecté antérieurement dans ledit échangeur de chaleur (5b) et entraîné par l'évaporat.

9. Procédé pour déshydrater des boues ou des substances pelletables à teneur en humidité supérieure à 50 %, mis en oeuvre dans un dispositif selon l'une quelconque ou plusieurs des revendications 1 à 8 portant sur le dispositif.
